# EUROPEAN PATENT APPLICATION

(11) **EP 4 741 297 A2**
(43) Date of publication of application: **13.05.2026**
(21) Application number: 25213075.2
(22) Date of filing: 03.11.2025
(51) Int. Cl.: B65B 1/16, B29C 65/38, B29C 65/00, B65B 1/36, B65B 9/067, B65B 9/207, B65B 9/22, B65B 29/00, B65B 51/22, B65B 51/24, B65B 51/30, B65B 61/08, B65B 9/06

(54) **A METHOD AND A MACHINE FOR THE PRODUCTION OF POUCHES CONTAINING A RESPECTIVE QUANTITY OF A LOOSE MATERIAL, IN PARTICULAR SINUS**

(30) Priority: 12.11.2024 IT 202400025431
(71) Applicant: Sasib S.p.A., 40013 Castel Maggiore (BO) (IT)
(72) Inventor: GHIOTTI, Roberto, 40013 CASTEL MAGGIORE (BO) (IT); MANGIULLO, Antonio, 40013 CASTEL MAGGIORE (BO) (IT); PIERAGOSTINI, Mauro, 40013 CASTEL MAGGIORE (BO) (IT)
(74) Representative: Studio Torta S.p.A.

(57) **Abstract**

A machine (6) for the production of pouches (1) containing a respective quantity (2) of a loose material, in particular snus, is provided, comprising a forming station (13) configured to enclose each quantity (2) within a wrapping material band (11) comprising, in turn, a wrapping device (14) at which the wrapping material band (11) is wound to form a tubular wrap (8) having a longitudinal extension in which a first edge of the wrapping material band (11) partially overlaps a second edge of the wrapping material band (11) defining an overlapping area; a longitudinal sealing unit (15) configured to longitudinally seal the tubular wrap (8) at the overlapping area; and a transverse sealing unit (16) configured to make transverse seals (5) of the tubular wrap (8) so as to form a continuous succession of pouches (1) connected to each other at said transverse seals (5). The transverse sealing unit (16) comprises a first device (25) and a second device (26), which cooperate to make the transverse seals (5). The first device (25) and the second device (26) are both configured to follow a trajectory divided into a first straight segment, wherein the transverse seals (5) are made, and a second arc-shaped segment.

## Description

### CROSS-REFERENCE TO RELATED APPLICATIONS

This patent application claims priority from Italian patent application no. 102024000025431 filed on November 12, 2024, the entire disclosure of which is incorporated herein by reference.

### TECHNICAL FIELD

This invention relates to a machine for the production of pouches (or sachets) containing a quantity of a loose product (that is, a non-compact product), in particular snus, and to a method for producing pouches containing a quantity of a loose product, in particular snus. This invention can be advantageously applied to the production of snus pouches (that is, permeable pouches for oral use that each contain a predetermined quantity of a loose, that is, non-compact product, that is more or less wet and, for example, nicotine-based), to which the discussion that follows will explicitly refer without any loss of generality thereby.

### PRIOR ART

As is well known, a snus pouch is essentially rectangular in shape, is made from a wrapping sheet that is folded back on itself to form a closed shape around a quantity of powdered material, and is stabilised by means of a longitudinal seal and a pair of opposite, transverse seals.

Typically, a wrapping machine for producing snus pouches comprises a conveyor device for conveying a wrapping material band along a packaging path, a wrapping station arranged along the packaging path, wherein the wrapping material band is wound to form a tubular wrap having a longitudinal extension around a wrapping duct, and a feeding device for the loose material that terminates at the inlet of the wrapping duct and is configured to successively feed the loose product quantities into the tubular wrap (around which the wrapping material is folded to form the tubular wrap) by means of compressed air.

The wrapping machine also comprises a longitudinal sealing unit to longitudinally seal the tubular wrap at an overlapping area of the wrapping material band; a transverse sealing unit to transversely seal the tubular wrap so as to form an alternating succession of sealing areas and areas containing a quantity of loose product; and a cutting unit to transversely cut the tubular wrap at the transverse sealing areas so as to separate the individual snus pouches.

Known transverse sealing units mostly perform heat sealing and comprise two opposing sealing rollers that cooperate together to press against each other (that is, pinch together) the tubular wrap, are rotatably mounted around two corresponding horizontal rotation axes, and are rotated by the same actuator device. Even if known transverse sealing units work satisfactorily, there is still a great need for solutions to increase their productivity.

Patents US5771660 and US2019210753 describe machines for the production of known pouches.

### DESCRIPTION OF THE INVENTION

The purpose of this invention is, therefore, to provide a machine for the production of pouches containing a quantity of a loose material, in particular snus, that is free from the drawbacks of the state of the art and is also easy and inexpensive to manufacture.

In accordance with this invention, a machine for the production of pouches containing a quantity of loose material, in particular snus, is provided, comprising a forming station configured to enclose each quantity within a wrapping material band comprising, in turn, a wrapping device at which the wrapping material band is wound to form a tubular wrap having a longitudinal extension in which a first edge of the wrapping material band partially overlaps a second edge of the wrapping material band defining an overlapping area; a longitudinal sealing unit configured to longitudinally seal the tubular wrap at the overlapping area; and a transverse sealing unit configured to make transverse seals of the tubular wrap so as to form a continuous succession of pouches connected to each other at said transverse seals.

The transverse sealing unit is preferably configured to perform cold sealing of the tubular wrap. The cold sealing limits (cancels) the heating of the quantity of product when the tubular wrap is being sealed. Advantageously, the cold sealing does not crystallise at the quantity of product, regardless of the composition of the quantity of product.

The transverse sealing unit preferably comprises a first device and a second device cooperating to make the transverse seals; wherein the first device and the second device are both configured to traverse a trajectory divided into a first straight segment wherein the first and second devices cooperate to make the transverse seals and a second arc-shaped segment (preferably circular).

According to a preferred embodiment, the transverse sealing unit is configured to carry out an impulse sealing of the tubular wrap to obtain the transverse seals. Alternatively, the transverse sealing unit is configured to perform ultrasonic sealing of the tubular wrap to achieve the transverse seals.

According to a preferred embodiment, the first and/or second device are defined by respective sealing bars having a respective heating element intended for heating the tubular wrap and preferably obtained by means of an electrical resistance connected to a control unit, by which it is controlled by means of current impulses.

According to a preferred embodiment, the first device and the second device are configured to travel the first straight segment of their respective trajectories at uniform speeds.

According to a preferred embodiment, the first device and the second device are configured to travel the first straight segment of their respective trajectories at the same speed with which the tubular wrap advances.

According to a preferred embodiment, the first straight segment defines a sealing step, during which the first and the second device cooperate with the tubular wrap to make the transverse seals from a seal start point to a seal end point; while the arc-shaped segment defines a return step from the seal end point to the seal start point.

According to a preferred embodiment, there is an adjustment device configured to maintain a constant sealing pressure during the first straight segment where the first and second devices cooperate with the tubular wrap to make the transverse seals.

According to a preferred embodiment, the adjustment device comprises a number of adjustment elements provided with respective axes parallel to one another and configured to translate along said axes in the area of a seal start point wherein the first and the second device come into contact with the tubular wrap to make the transverse seals and of a seal end point where the contact between the first and the second device and the tubular wrap is interrupted.

According to a preferred embodiment, each adjustment element comprises sleeves running along respective pistons coaxial to said axes.

According to a preferred embodiment, the adjustment device comprises a number of limit stop elements configured to adjust the stroke of the adjustment elements along the respective axes.

According to a preferred embodiment, operating means are provided for the first device and the second device comprising in turn an actuator device, preferably a brushless motor, configured to transmit motion to a number of eccentric shafts controlling the motion of the first sealing device and the second sealing device.

Another purpose of this invention is to provide a method for the production of pouches containing a quantity of a loose material, in particular snus, that involves, successively, a step in which a wrapping material band is wound around a wrapping device to form a tubular wrap having a longitudinal extension in which a first edge of the wrapping material band partially overlaps with a second edge of the wrapping material band defining an overlapping area; a longitudinal sealing step of the tubular wrap at the overlapping area; and a transverse sealing step of the tubular wrap so as to form a continuous succession of interconnected pouches.

In particular, the transverse sealing step is carried out by means of a transverse sealing unit having a first device and a second device, and in turn involves a first sub-step, in which the first device and the second device travel a first straight segment of a trajectory in which they cooperate with each other to carry out the transverse sealing; and a second sub-step in which the first device and the second device travel a second arc-shaped segment (preferably circular) of the trajectory.

### BRIEF DESCRIPTION OF THE DRAWINGS

This invention will now be described with reference to the accompanying drawings, which illustrate a non-limiting embodiment thereof, wherein:
- Figure 1 is a perspective view of a pouch containing a quantity of loose material;
- Figure 2 is a front view with parts removed for clarity of a wrapping machine for the production of pouches in Figure 1 manufactured in accordance with this invention;
- Figure 3 is a side perspective view, with parts removed for clarity, of a transverse sealing unit of the wrapping machine in Figure 2;
- Figure 4 is a front view, with parts removed for clarity, of the transverse sealing unit in Figure 3;
- Figure 5 is a side view, with parts removed for clarity, of the transverse sealing unit in Figure 3;
- Figure 6 is a perspective view of a detail of the transverse sealing unit in Figure 3;
- Figure 7 is a schematic front view illustrating the operation of the transverse sealing unit in Figure 3;

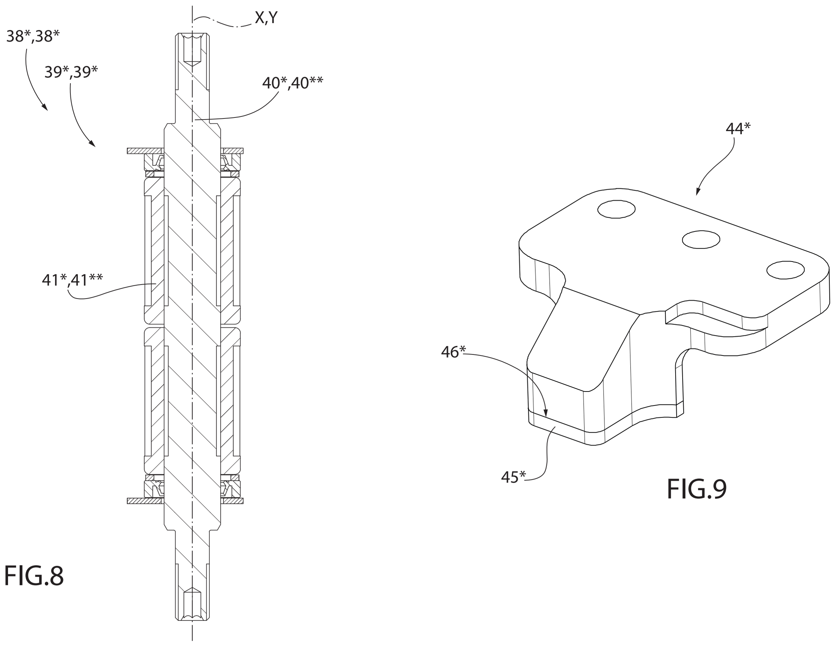

- Figure 8 is a cross-section view of an adjustment element of the transverse sealing unit in Figure 3;
- Figure 9 is a perspective view of an limit-stop element of the transverse sealing unit in Figure 3;
- Figure 10 is a perspective view of an impulse heating element of the transverse sealing unit in Figure 3;
- Figure 11 is a perspective view of a conditioning device of the transverse sealing unit in Figure 3;
- Figure 12 is a perspective view of a first element for conditioning the device in Figure 11;
- Figures 13 and 14 are a perspective view and a plan view, respectively, of a second element for conditioning the device in Figure 11;

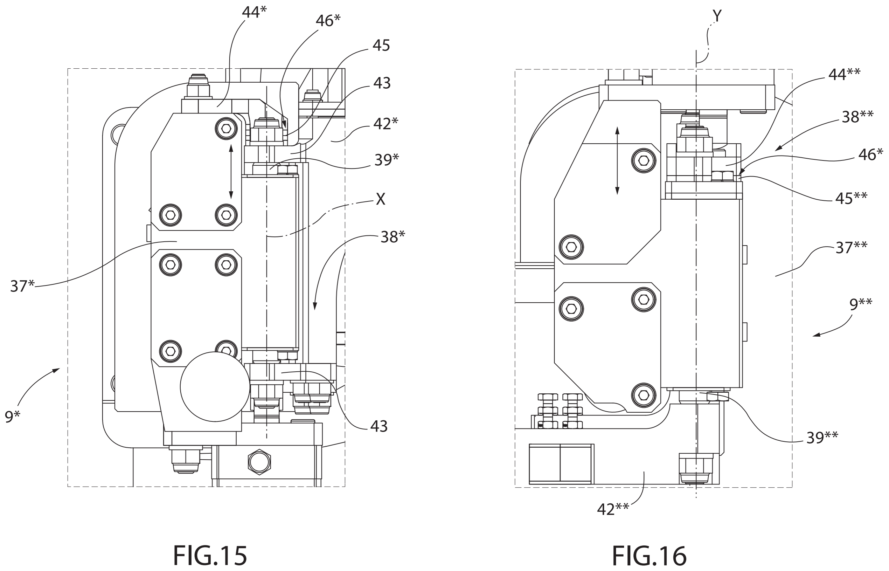

- Figures 15 and 16 are front views of two different details of the transverse sealing unit in Figure 3.

### PREFERRED EMBODIMENTS OF THE INVENTION

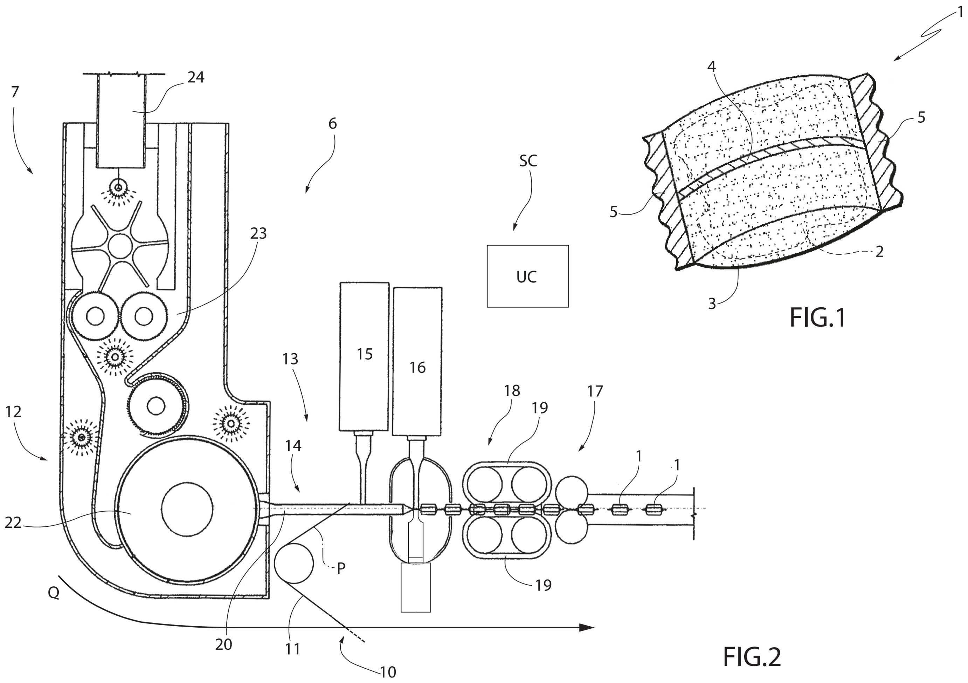

In Figure 1, the reference number 1 denotes, as a whole, a pouch containing a quantity 2 of a loose material (that is, a non-compact product in the form of powder, granules or paste, for example).

The pouch 1 that contains the quantity 2 of loose material is preferably a product intended for oral use. Alternatively, the pouch 1 containing the quantity 2 of loose material could be a product for infusion or other uses; in this case, the quantity 2 could comprises crushed or powdered tea leaves or herbs.

In accordance with the preferred embodiment, the pouch 1 contains a quantity 2 of snus.

In particular, the quantity 2 of loose material may be a more or less moist material; if the material of the quantity 2 has a low moisture content, then the material will be in a powdery/granular and extremely non-compact form; if the material of the quantity 2 has a higher moisture content, it will be in a more pasty and more compact form.

The quantity 2 of loose material preferably comprises nicotine (for example, it may comprise tobacco and/or extracted nicotine) and/or other flavourings.

The pouch 1 has an essentially quadrilateral shape, preferably square or rectangular.

With particular reference to Figure 1, the pouch 1 is rectangular in shape and has a longitudinal extension along one extension axis.

The pouch 1 consists of a wrapping sheet 3 that is folded back on itself to form a closed shape around the quantity 2 and is stabilised by sealing. In particular, the pouch 1 is closed by a longitudinal seal 4 (that is, parallel to the extension axis of the pouch 1) and by two transverse seals 5 (that is, transverse, in particular orthogonal to the extension axis of the pouch 1) that are opposite to each other and preferably parallel. In other words, the wrapping sheet 3 is folded around the quantity 2 and stabilised by sealing.

In Figure 2, reference number 6 denotes, as a whole, a wrapping machine that produces the pouches 1.

The wrapping machine 6 comprises a number of wrapping units 7, each of which is configured to produce the pouches 1. Advantageously, each wrapping unit 7 operates on a double (or triple) line to make two (or three) pouches 1 at a time; in other words, each wrapping unit 7 is configured to make two (or three) rows of pouches 1 simultaneously. Alternatively, each wrapping unit 7 operates on a single line (that is, it makes a single pouch 1 at a time or, better still, a single row of pouches 1 at a time).

The wrapping unit 7 comprises a conveyor device 10 for conveying a wrapping material band 11 along a feeding path P to a forming station 13 as described in more detail in the following discussion.

Inside the wrapping unit 7, the loose material is instead fed along a packaging path Q with a feeding device 12 configured to feed the quantities 2 on the wrapping material band 11.

The wrapping unit 7 also comprises the forming station 13 arranged downstream of the feeding device 12 along the packaging path Q to enclose the quantities 2 within the wrapping material band 11.

In particular, the forming station 13 comprises:
- a wrapping device 14, in the area of which the wrapping material band 11 is wound so as to form a tubular wrap 8 having a longitudinal extension, wherein a first edge of the wrapping material band 11 partially overlaps a second edge of the wrapping material band 11, thus defining an overlapping area;
- a longitudinal sealing unit 15 arranged downstream of or adjacent to the wrapping device 14 along the packaging path Q and configured to longitudinally seal the tubular wrap 8 at the overlapping area so as to achieve the longitudinal sealing 4;

- a transverse sealing unit 16 arranged downstream of the longitudinal sealing unit 15 along the packaging path Q and configured to make the transverse seals 5 of the tubular wrap so as to form a continuous succession of pouches 1 connected to each other at the transverse seals 5; and
- a cutting device 17 arranged downstream of the transverse sealing unit 16 along the packaging path Q and configured to transversely cut the tubular wrap 8 at the transverse seals 5 so as to separate the individual pouches 1.

The wrapping device 14, the longitudinal sealing unit 15, the transverse sealing unit 16 and the cutting device 17 are therefore arranged successively along the packaging path Q.

In accordance with the embodiment illustrated in Figure 2, an advancing device 18 is interposed between the transverse sealing unit 16 and the cutting device 17. The advancing device 18 comprises a pair of belts 19 looped around respective pulleys and overlapping each other; the pair of belts 19 defines a channel for the passage of the pouches 1. More specifically, the advancing device 18 is configured to feed the continuous succession of pouches 1 from the transverse sealing unit 16 to the cutting device 17.

The wrapping device 14 comprises a tubular spindle element 20 that extends along the packaging path Q (that is, parallel to the packaging path Q). The outer surface of the tubular spindle element 20 defines a wrapping surface around which the wrapping material band 11 is folded to form the tubular wrap 8. The tubular spindle element 20 internally defines a loose material feeding duct.

The loose material feeding device 12 is configured to successively feed the quantities 2 into the tubular wrap 8 along the packaging path Q. The feeding device 12 is therefore placed upstream of the forming station 13 along the packaging path Q.

The feeding device 12 comprises a feeding drum 22 that rotates preferably with an intermittent law of motion (that is, presenting a cyclic alternation of motion and rest steps) around a horizontal rotation axis. The feeding drum 22 is coupled to a suction source at a loading station wherein the feeding drum 22 receives the loose material and is coupled to a compressed air source at a feeding station wherein the feeding drum 22 (by means of compressed air jets) directs the individual quantities 2 into the feeding duct defined by the tubular spindle element 20.

In use, as the feeding drum 22 rotates, a continuous bead of loose material is progressively formed on the shell of the feeding drum 22 (due to the effect of the suction source); the continuous bead of loose material is conveyed to the feeding station wherein, due to the effect of the compressed air source, the quantities 2 are separated from the continuous bead and conveyed along the feeding duct defined by the tubular spindle element 20 to enter the wrapping material band 11 folded into a tube around the tubular spindle element 20.

The feeding device 12 then comprises a hopper 23 that is arranged above the feeding drum 22 and transports the loose material by gravity to the loading station wherein the loose material is taken from the feeding drum 22. The hopper 23 is open at the top and is in communication with a loose material inlet channel 24.

The feeding device 12 is configured to feed the quantities 2 into the feeding duct defined by the tubular spindle element 20 in such a way that each quantity 2 is separated from the preceding quantity 2 and the subsequent quantity 2 by a corresponding gap that is necessary to perform the transverse seal 5 without the transverse seal 5 trapping loose material or otherwise locally compressing the loose material. In other words, the feeding duct defined by the tubular spindle element 20 is filled with quantities 2 interspersed with gaps made to allow for the transverse seal 5.

Finally, the wrapping machine 6 comprises a single control system SC that oversees the operation of all the wrapping units 7. More specifically, the control system SC comprises a control unit UC configured to control the wrapping units 7.

The control system SC may comprise a first optical sensor (not shown) for each wrapping unit 7 connected to the control unit UC. The first sensor is configured to detect the quality of the continuous succession of pouches 1 (that is, to detect the presence of dust, or "fleas", that is, impurities in the seals) and to transmit a signal indicating the quality of each pouch 1 to the control unit UC; the control unit UC is configured to control the discarding of non-compliant pouches 1 according to the signals received from the first sensor. Advantageously, the first optical sensor is placed downstream of the transverse sealing unit 16 along the packaging path Q. In particular, the first optical sensor is interposed between the transverse sealing unit 16 and the advancing device 18.

The control system SC then comprises a second optical sensor (not shown) for each wrapping unit 7 connected to the control unit UC. The second sensor is configured to detect the cutting quality of the individual pouches 1 and/or the transverse dimension of the transverse seals 5 and to transmit an indicative signal to the control unit UC; the control unit UC is configured to control the cutting device 17 according to the signals received from the second sensor and to command the discarding of non-compliant pouches 1. Advantageously, the second optical sensor is placed downstream of the cutting unit 17 along the packaging path Q.

It should be noted that the second sensor may be in addition or alternatively to the first sensor.

Finally, the control system SC may comprise a third optical sensor (not shown) for each wrapping unit 7 connected to the control unit UC. The third sensor is configured to detect the weight of each pouch 1 and to transmit a signal indicative of the weight of each pouch 1 to the control unit UC; the control unit UC is then configured to drive (control) the respective feeding drum 22 according to the signals received from the third sensor. Advantageously, the third sensor is a microwave one.

It should be noted that the third sensor may be in addition or alternatively to the first optical sensor and/or the second optical sensor.

The transverse sealing unit 16 will now be described in detail.

Advantageously, like the rest of the wrapping unit 7 illustrated in the figures, the transverse sealing unit 16 also operates on a double line to simultaneously make transverse seals 5 on two tubular wraps 8 arranged in parallel. As mentioned above, it is understood that the wrapping unit 7 could also operate on a single line.

The transverse sealing unit 16 is preferably configured to perform cold sealing of the tubular wrap 8. "Cold sealing" refers to any type of joining process involving the diffusion of material between two components to be joined without the need to apply heat (preferably at room temperature), in particular without heating the material being sealed.

A prime example of cold sealing is ultrasonic sealing, which does not involve applying heat. A second example of cold sealing is impulse sealing; this involves, for the purpose of the seal, heating a copper wire, which is then cooled very quickly by cold liquid or air.

In particular, in the case of transverse heat sealing, crystallisation of part of the quantity 2 of loose material, which tends to blacken, may occur. In particular, in the event that some particles of the quantity 2 of loose material are mistakenly found in the area of the transverse seal 5, they may crystallise and become dark in colour during the heat sealing process. This would compromise the aesthetic features of the pouch 1, which may have to be discarded.

Advantageously, cold sealing limits (in particular eliminates) the heating of the loose material quantity 2. In this way, crystallisation of the loose material quantity 2 is avoided. Advantageously, there is a reduction of discarded pouches 1 due to insufficient quality.

The transverse sealing unit 16 comprises a pair of callipers 9 that cooperate with each other and are mobile with respect to each other (as described in more detail in the following discussion) to make the transverse seals 5 of the tubular wrap (that is, the wrapping material band 11 folded to form the tubular wrap 8). More specifically, a (first) lower mobile calliper 9* is arranged below the tubular wrap 8 and a (second) upper mobile calliper 9** is arranged above the tubular 8 wrap.

In use, the tubular wrap 8 is interposed between the lower mobile calliper 9* and the upper mobile calliper 9**.

Advantageously, the lower mobile calliper 9* supports a (first) device 25
and the (second) upper mobile calliper 9** supports a (second) device 26
or alternatively a countering element 26. According to a possible variant, the (first) lower mobile calliper 9* supports the (second) device 26 or countering element 26 while the (second) upper mobile calliper 9** supports the (first) device 25.

In particular, the transverse sealing unit 16 will now be described with reference to a transverse sealing unit 16 configured for ultrasonic sealing of the tubular wrap 8. The transverse sealing unit 16 comprises a single ultrasonic generator 21 that delivers a high-frequency sinusoidal electrical impulse to a vibrating assembly comprising a converter constructed to transform the electrical impulse into a mechanical vibration movement to transfer it to a sonotrode 25 that transmits the energy in the form of vibrations directly to the tubular wrap 8. The sonotrode 25 defines the (first) device 25.

In particular, the sonotrode 25 comprises a body extending longitudinally and is provided with a first end connectable to the ultrasonic generator 21, and a second end or sealing head 27, opposite the first end, which has a profile designed to be in contact with the tubular wrap 8. The sealing head 27 has an essentially rectangular shape in plan with a rather small transverse dimension (width). The sealing head 27 is preferably made of titanium.

On the other hand, the countering element 26 is defined by an anvil 26 (or fixture or countering member) that cooperates with the sonotrode 25 for sealing the tubular wrap 8. The anvil 26 has a countering head 28 having, in plan, a shape mirroring the shape of the sealing head 27. The countering head 28 has an essentially rectangular shape in plan with a rather small transverse dimension (width). The anvil 26 is preferably made of steel.

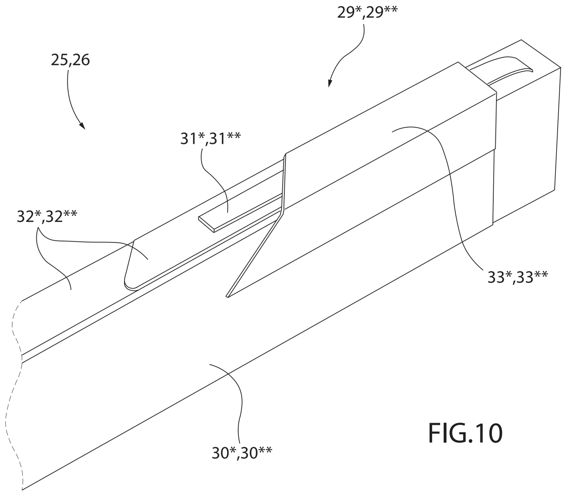

According to a possible embodiment shown in Figure 10, the transverse sealing unit 16 is configured for impulse sealing of the tubular wrap 8.

In this case, the (first) device 25 is defined by a (first) sealing bar 29* having a longitudinal extension support body 30* preferably made of aluminium. The sealing bar 29* has an essentially rectangular shape in plan with a rather small transverse dimension (width).

The sealing bar 29* also comprises a heating element 31* intended for heating the tubular wrap 8, preferably by means of an electrical resistance with reduced thickness connected to a control unit from which it is driven. The electrical resistance is connected to the upper surface of said support body 30*. The control unit is configured to supply current impulses to the heating element 31* exclusively during a sealing step. Advantageously, the heating element 31* is made of a material with reduced thermal inertia, that is, it is made of a material capable of heating up quickly (to allow sealing of the tubular wrap 8 during the sealing step) and cooling down just as quickly (to avoid transferring heat to the loose material contained within the tubular wrap 8 at the end of the sealing step and before the start of the next sealing step). In other words, the heating element 31* is normally maintained at room temperature and heated by current impulses fed by the control unit exclusively during the sealing steps to make the transverse seals 5 on the tubular wrap 8; that is, the heating element 31* is not continuously fed by the control unit.

In accordance with Figure 10, the heating element 31* preferably has a rectangular shape.

In particular, the transverse dimension (width) of the heating element 31* can be appropriately defined on the basis of the desired transverse seal 5 width. For example, if a transverse seal 5 of the pouch of 2.5 mm is desired, it will be necessary to make a seal with a width of 5 mm (which will then be cut in the middle to define the transverse seals of 2.5 mm); in this case, the heating element 31* must have a width of 5 mm.

The sealing bar 29* also comprises a number of intermediate layers 32* (for example, two intermediate layers 32*) interposed between the support body 30* and the heating element 31*; the intermediate layers 32* are preferably made of plastic (for example, PTFE).

Furthermore, according to a preferred embodiment, the sealing bar 29* comprises a coating layer 33* arranged above the heating element 31* and made to come into contact with the tubular wrap 8 (and prevent the heating element 31* from coming into direct contact with the tubular wrap 8).

According to a preferred embodiment, the support body 30* is provided with a conditioning device (not illustrated), made by means of a duct formed within the support body 30* itself and through which a conditioning fluid (preferably air or water) flows. The conditioning device is configured to speed up the cooling step of the heating element 31* and to avoid transferring heat to the loose material contained within the tubular wrap 8 at the end of one sealing step and before the start of the subsequent sealing step.

According to a first embodiment, the (second) device 26 comprises a countering element cooperating with the (first) device 25 for sealing the tubular wrap 8. The countering element 26 has an essentially rectangular shape in plan and mirrors the shape of the sealing bar 29 with which it cooperates to make the transverse seals 5 of the tubular wrap 8.

According to another, preferred embodiment, the (second) device 26 is also defined by a (second) sealing bar 29** essentially identical to the (first) device 25 (and for this reason some features are not described as already done with reference to the first device 25) and having a longitudinal extension support body 30** preferably made of aluminium. The sealing bar 29** has an essentially rectangular shape in plan with a rather small transverse dimension (width).

The sealing bar 29** also comprises a heating element 31** intended for heating the tubular wrap 8, preferably by means of an electrical resistance with reduced thickness connected to a control unit by which it is driven. The electrical resistance is connected to the upper surface of said support body 30**. The control unit is configured to supply current impulses to the heating element exclusively during a sealing step. Advantageously, the heating element 31** is made of a material with reduced thermal inertia, that is, it is made of a material capable of heating up quickly (to allow sealing of the tubular wrap 8 during the sealing step) and cooling down just as quickly (to avoid transferring heat to the loose material contained within the tubular wrap 8 at the end of the sealing step and before the start of the subsequent sealing step). In other words, the heating element 31** is maintained at room temperature and heated by current impulses fed by the control unit exclusively during the sealing steps to make the transverse seals 5 on the tubular wrap 8; that is, the heating element 31 ** is not continuously fed by the control unit.

The sealing bar 29** also comprises a number of intermediate layers 32** (for example, two intermediate layers 32**) interposed between the support body 30** and the heating element 31**; the intermediate layers 32** are preferably made of plastic (for example, PTFE or polytetrafluoroethylene ).

Furthermore, according to a preferred embodiment, the sealing bar 29** comprises a coating layer 33** arranged above the heating element 31** and made to come into contact with the tubular wrap 8 (and prevent the heating element 31** from coming into direct contact with the tubular wrap 8).

According to a preferred embodiment, the support body 30** is provided with a conditioning device, made by means of a duct formed within the support body 30** and through which a conditioning fluid (air or water) flows. The conditioning device is configured to speed up the cooling step of the heating element 31 ** and to avoid transferring heat to the loose material contained within the tubular wrap 8 at the end of one sealing step and before the start of the subsequent sealing step.

The embodiment illustrated in Figure 10 has certain advantages, in particular the fact that the transverse impulse sealing unit 16 is rather robust and reliable and does not require frequent maintenance.

Therefore, in accordance with the above, the sealing unit 16 can be of the cold sealing type. In particular, the sealing unit 16 can be either of the ultrasonic sealing type or the impulse sealing type. In accordance with one embodiment, the sealing unit 16 can be of the hot sealing type.

Moreover, the sealing unit 16 comprises a first device 25 and a second device 26, which cooperate to make the transverse seals 5. If the sealing unit 16 is of the ultrasonic sealing type, then the first device 25 is a sonotrode and the second device 26 is an anvil, or vice versa. If the sealing unit 16 is of the impulse sealing type, then the first device 25 is a sealing bar 29*, 29** and the second device 26 is a striker, or vice versa, or both devices 25, 26 are sealing bars 29*, 29**.

The movement of the two lower and upper mobile callipers 9 is described below. In the following discussion, specific reference is made to the fact that the sealing unit 16 is of the ultrasonic type and the first device 25 is a sonotrode and the second device 26 is an anvil. It is understood that everything concerning the handling of the two lower and upper mobile callipers 9 described with reference to an ultrasonic sealer is also valid for another type of cold sealer (for example, an impulse sealer as described above) or for a hot sealer.

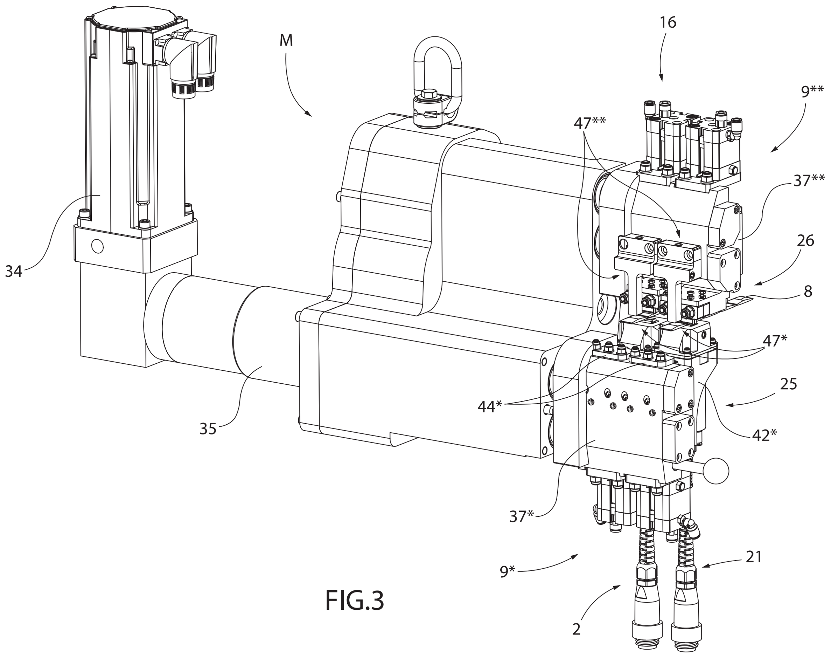

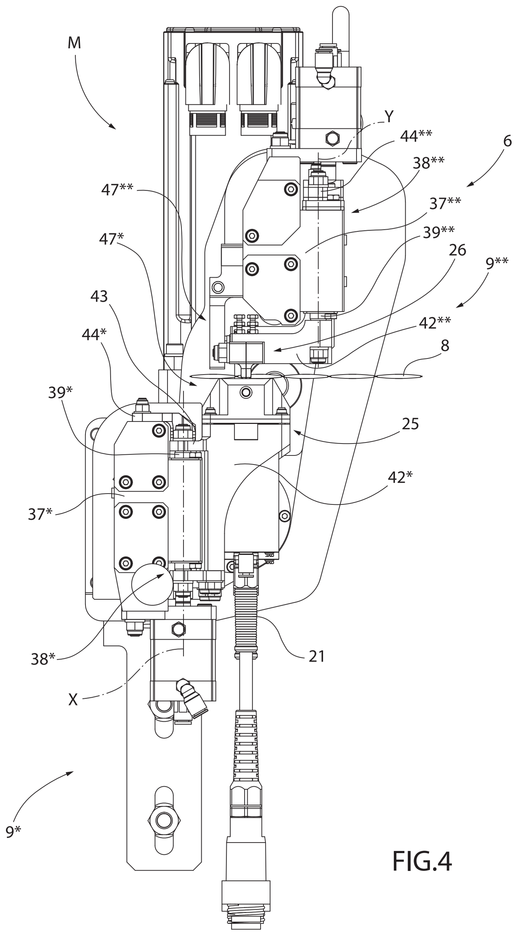

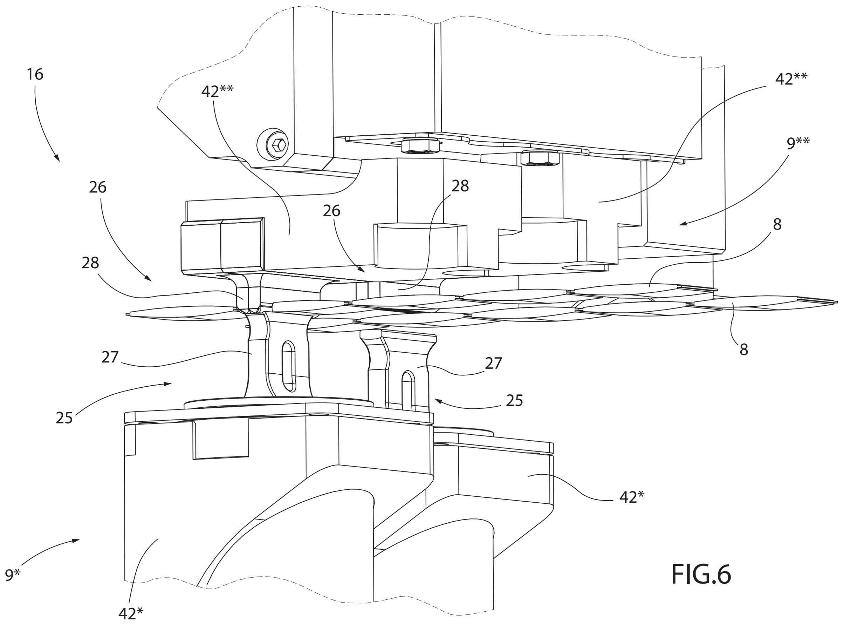

As illustrated in Figures 3 to 6, the movement of the two lower and upper mobile callipers 9 is controlled by means of operating means M. The operating means M comprise an actuator device 34, preferably a brushless motor. The actuator device 34 is configured to control the movement of the two mobile callipers 9; in other words, the single actuator device 34 is configured to drive the movement of both the lower mobile calliper 9* and the upper mobile calliper 9**.

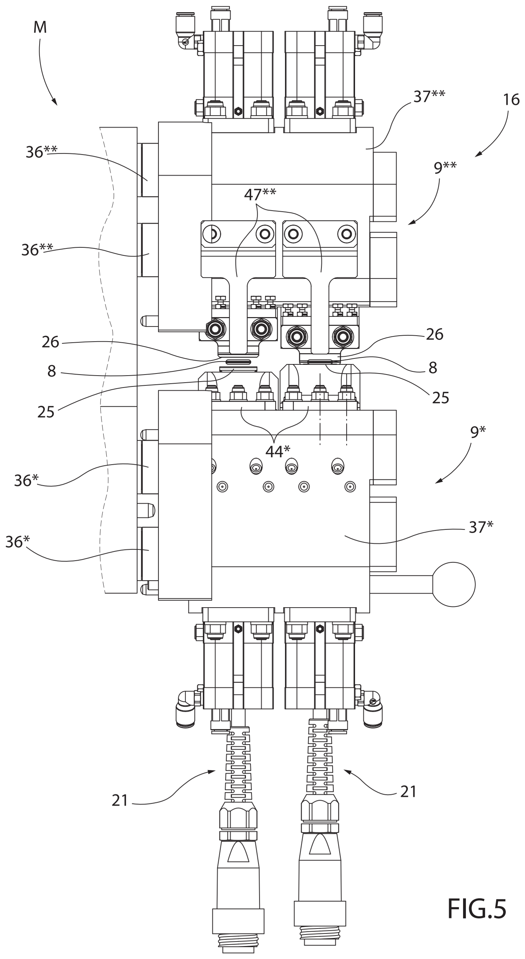

More specifically, the operating means M also comprise a reducer device 35 that is connected to the actuator device 34 and is configured to transmit motion to a number of eccentric shafts 36. In particular, the operating means M comprise multiple eccentric shafts 36. More specifically, the operating means M comprise a first number of eccentric shafts 36* to control the movement of the lower mobile calliper 9* and an equal number of eccentric shafts 36** to control the movement of the upper mobile calliper 9**. According to the embodiment illustrated in Figure 5, the operating means M comprise a pair of eccentric shafts 36* to control the movement of the lower mobile calliper 9* and a pair of eccentric shafts 36** to control the movement of the upper mobile calliper 9**. The four eccentric shafts 36 have their respective axes parallel to each other.

The lower mobile calliper 9* comprises a support structure 37* within which the ends of the pair of eccentric shafts 36* configured to control the movement of the lower mobile calliper 9* are housed. The two eccentric shafts 36* overlap each other with their respective axes parallel to each other. The two eccentric shafts 36* are connected with one (first) end to the actuator device 34, by which they are driven into rotation, and with one (second) end they are connected to the support structure 37*.

Similarly, the upper mobile calliper 9** comprises a respective support structure 37** within which the ends of the pair of eccentric shafts 36** configured to control the movement of the upper mobile calliper 9** are housed. The two eccentric shafts 36** overlap each other with their respective axes parallel to each other. The two eccentric shafts 36** are connected with one (first) end to the actuator device 34, by which they are driven into rotation, and with one (second) end they are connected to the support structure 37**.

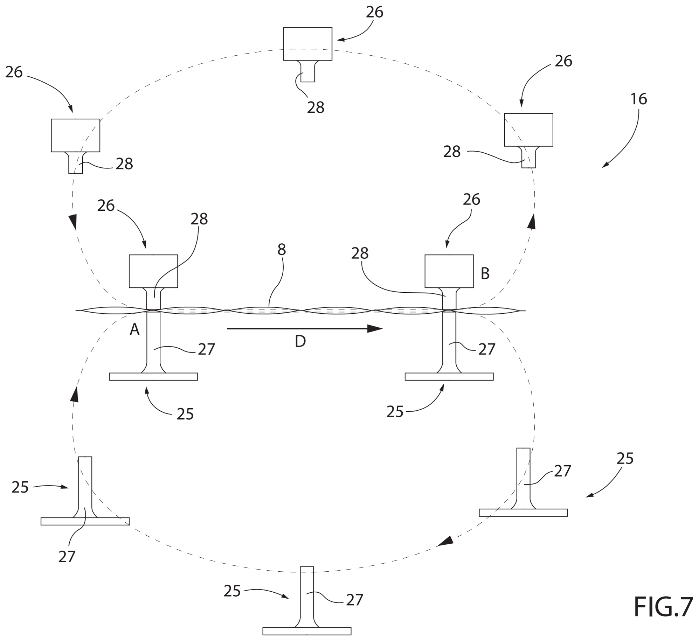

As illustrated in Figure 7, the lower mobile calliper 9* (of which only the sonotrode 25 is schematically illustrated) travels a trajectory having a "deflated wheel" profile divided into:
- a straight (linear) segment along a forward direction D from a seal start point indicated by A, at which the sonotrode 25 and the anvil 26 come into contact with the tubular wrap 8 to make the transverse seal 5, to a seal end point indicated by B, at which the contact between the sonotrode 25 and the anvil 26 and the tubular wrap 8 is interrupted after completing the transverse seal 5; and
- an arc-shaped segment (preferably circular) from the seal end point B, wherein the contact between the sonotrode 25 and anvil 26 and the tubular wrap 8 is interrupted after completing the transverse seal 5, to seal start point A, wherein the sonotrode 25 and anvil 26 again come into contact with the tubular wrap 8 to create a new transverse seal 5. Clearly, the radius of the arc (preferably circular) travelled by the lower mobile calliper 9* is determined by the eccentric shafts 36*.

The upper mobile calliper 9** (of which only the anvil 26 is schematically illustrated) also travels along a trajectory having a "deflated wheel" profile subdivided into a straight (linear) segment along the forward direction D from the seal start point A, wherein the sonotrode 25 and the anvil 26 come into contact with the tubular wrap 8 to make the transverse seal 5, to the seal end point B, wherein the contact between the sonotrode 25 and the anvil 26 and the tubular wrap 8 is interrupted after completing the transverse seal 5, and an arc-shaped segment (preferably circular) from the seal end point B, at which the contact between the sonotrode 25 and the anvil 26 and the tubular wrap 8 is interrupted after completing the transverse seal 5, to the seal start point A, at which the sonotrode 25 and the anvil 26 again come into contact with the tubular wrap 8 to perform a new transverse seal 5. Clearly, the radius of the arc of a circle travelled by the upper mobile calliper 9** is also determined by the eccentric shafts 36**.

In the straight segment between the seal start point A and the seal end point B, the sonotrode 25 and anvil 26 cooperate to make the transverse seal 5 on the tubular wrap 8. In the straight segment between the seal start point A and the seal end point B, the two lower and upper mobile callipers 9 advance at a uniform speed. That is, in the straight segment between the seal start point A and the seal end point B, the two lower and upper mobile callipers 9 advance synchronously. More specifically, in the straight segment between the seal start point A and the seal end point B, the two lower and upper mobile callipers 9 advance at the same speed at which the tubular wrap 8 advances.

The motion of the lower mobile calliper 9* is then divided into a sealing step, wherein the lower mobile calliper 9* moves from the seal start point A to the seal end point B, and a return step wherein the lower mobile calliper 9* moves from the seal end point B to return again to the seal start point A by travelling through the arc. During the return step, the lower mobile calliper 9* travels through the arc-shaped segment (preferably circular) at a non-constant speed, in particular accelerating in relation to the speed of the straight segment. The lower mobile calliper 9* travels the arc-shaped segment (preferably circular) in a clockwise direction. The motion of the lower mobile calliper 9* is divided into two steps that are preferably (but not necessarily) of equal duration, that is, the sealing step has a duration equal to that of the return step.

The motion of the upper mobile calliper 9** is then divided into a sealing step, wherein the upper mobile calliper 9** moves from the seal start point A to the seal end point B, and a return step wherein the upper mobile calliper 9** moves from the seal end point B to return again to the seal start point A by travelling through the arc. During the return step, the upper mobile calliper 9** travels through the arc-shaped segment (preferably circular) at a non-constant speed, in particular accelerating in relation to the speed of the straight segment. The upper mobile calliper 9** travels the arc-shaped segment (preferably circular) in an anticlockwise direction. The motion of the upper mobile calliper 9** is divided into two steps preferably (but not necessarily) of equal duration, that is, the sealing step has a duration equal to that of the return step.

As the lower and upper mobile callipers 9 travel along the straight segment, the sonotrode 25 and anvil 26 are arranged facing and in contact so as to create the transverse seal 5 of the tubular wrap 8. The sealing pressure applied by the sonotrode 25 and the anvil 26 to the tubular wrap 8 during the sealing step (that is, when the lower and upper mobile callipers 9 are travelling along the straight segment) is kept constant throughout the sealing step.

From what has been described in the foregoing discussion, it is apparent that the transverse sealing unit 16 operates continuously, that is, the tubular wrap 8 never stops at the transverse sealing unit 16 to make the transverse seals 5, but rather the lower mobile calliper 9* and the upper mobile calliper 9** are made to chase the tubular wrap 8 to make the transverse seals 5 in succession to each other.

From the above discussion, it is also evident that the "deflated wheel" trajectory of the two mobile callipers 9 can be advantageously applied with any type of sealing. In particular, this "deflated wheel" trajectory of the two mobile callipers 9 can be advantageously applied with an ultrasonic sealer, impulse sealer or even a hot sealer.

The operating means M also comprise an adjustment device 38 that is configured to maintain a constant sealing pressure during the sealing step.

Advantageously, the constant sealing pressure during the entire sealing step ensures good sealing quality.

In other words, the adjustment device 38 is designed to adjust the sealing pressure at a constant value from the moment of contact of the sonotrode 25 and the anvil 26 with the tubular wrap 8 (that is, from the seal start point indicated by A) until the end of the sealing step (that is, from the seal start point indicated by B).

The adjustment device 38 is divided into a (first) lower adjustment device 38* connected to the lower mobile calliper 9* and a (second) lower adjustment device 38** connected to the upper mobile calliper 9**.

The lower adjustment device 38* comprises a number of adjustment elements 39* arranged side by side. More specifically, the lower adjustment device 38* comprises multiple adjustment elements 39* arranged side-by-side and provided with their respective parallel axes X. In particular, the lower adjustment device 38* comprises four adjustment elements 39* arranged side by side. The adjustment elements 39* are housed within the support structure 37*. In particular, the adjustment elements 39* are defined by pneumatically actuated cylinders. According to a preferred embodiment, the adjustment elements 39* are made by means of pistons 40* coaxial to the axis X housed within respective recirculating ball bushings 41* (or sleeves); wherein the recirculating ball bushings 41* (or sleeves) slide relative to the pistons 40* along the axis X.

Advantageously, the adjustment elements 39* pushing throughout the sealing step ensure a constant sealing pressure. In addition, this pushing action of the adjustment elements 39* is also able to compensate for possible wear of the first device 25 of the sealing unit 16.

The lower mobile calliper 9* also comprises a sonotrode 25 housing element 42* that is permanently connected to the four adjustment elements 39*. In particular, the housing element 42* is provided with a number of connecting appendages 43 that extend towards the lower adjustment device 38*. The appendages 43 are provided with respective through holes; in particular, the appendages 43 are provided with the same number of through holes as the number of adjustment elements 39*. Each through hole is, in use, coaxial to a respective adjustment element 39* to which it is firmly attached by means of known fasteners.

Finally, the lower adjustment device 38* comprises a number (in particular two) of lower limit-stop elements 44* arranged side-by-side, which are configured to adjust the travel of the adjustment elements 39* along their respective axes X. In other words, each lower limit-stop element 44* is configured to adjust the travel along the axis X of the corresponding adjustment elements 39*.

Each lower limit-stop element 44* is essentially L-shaped and is defined by an upper appendage that is permanently connected by means of known fasteners to an upper end of the support structure 37*; and a lower appendage, connected to the upper appendage that extends towards the appendages 43 and is provided with a lower surface 46*. Advantageously, each limit-stop element 44* is made of metal, preferably steel.

Each lower limit-stop element 44* also comprises a sheet 45* for attenuating (cushioning or compensating for) the impact between the sonotrode 25 and the anvil 26, preferably made of elastomeric material, connected to the lower surface 46* and arranged, in use, facing and adjacent to the appendages 43.

In use, the lower limit-stop element 44* is configured to be arranged in two extreme positions: a (first) extreme position wherein the sheet 45* is arranged in contact with the appendages 43 and a (second) extreme position wherein the sheet 45* is arranged facing and at a non-zero distance from the appendages 43. The first extreme position is reached by the lower limit-stop element 44* at the seal end point B and the second extreme position is reached by the lower limit-stop element 44* at the seal start point A. During the sealing step (that is, at the straight segment from point A to point B), the lower limit-stop element 44* is in the second extreme position, while during the return step (that is, at the arc-shaped segment from point B to point A), the lower limit-stop element 44* is in the first extreme position.

The lower limit-stop element 44* is a modular element that can be replaced to change the length of the straight segment from point A to point B, that is, to change the sealing time at the same machine speed.

The upper adjustment device 38** also comprises a number of adjustment elements 39** arranged side by side. More specifically, the upper adjustment device 38** comprises multiple adjustment elements 39** arranged side by side and provided with their respective parallel axes Y. In particular, the upper adjustment device 38** comprises four adjustment elements 39** arranged side by side. The adjustment elements 39** are housed within the support structure 37**. In particular, the adjustment elements 39** are defined by pneumatically actuated cylinders. According to a preferred embodiment, the adjustment elements 39** are made by means of pistons 40** coaxial to the axis X housed within respective recirculating ball bushings 41** (or sleeves); wherein the recirculating ball bushings 41** (or sleeves) slide relative to the pistons 40** along the axis X.

Advantageously, the adjustment elements 39** pushing throughout the sealing step ensure a constant sealing pressure. In addition, this pushing action of the adjustment elements 39** is also able to compensate for possible wear of the second device 26 of the sealing unit 16.

The upper mobile calliper 9** also comprises an anvil 26 housing element 42** that is permanently connected to the four adjustment elements 39**. In particular, the housing element 42** comprises an end portion provided with respective through holes; in particular, the end portion is provided with the same number of through holes as the number of adjustment elements 39**. Each through hole is, in use, coaxial to a respective adjustment element 39** to which it is firmly attached by means of known fasteners.

Finally, the upper adjustment device 38** comprises a number (specifically two) of upper limit-stop elements 44** arranged side by side, which are configured to adjust the stroke of the adjustment elements 39** along their respective axes Y. In other words, each lower limit-stop element 44** is configured to adjust the translation along the axis X of the corresponding adjustment elements 39**.

Each upper limit-stop element 44** is provided with a lower surface 46** that, in use, is configured to arrange itself in contact with the support structure 37** during the return step wherein the upper mobile calliper 9** travels through the arc-shaped segment, and is instead configured to be arranged at a certain (non-zero) distance from the support structure 37** during the sealing step wherein the upper mobile calliper 9** travels through the linear segment.

The upper limit-stop element 44** also comprises a sheet 45** for attenuating (damping) the impact between the sonotrode 25 and the anvil 26, preferably made of elastomeric material, connected to the lower surface 46** and adjacent to the support structure 37**. In use, the upper limit-stop element 44** is configured to be arranged in two extreme positions: a (first) extreme position wherein the sheet 45** is arranged in contact with the support structure 37** and a (second) extreme position wherein the sheet 45** is arranged facing and at a non-zero distance from the support structure 37**.

The first extreme position is reached by the lower limit-stop element 44** at the seal end point B and the second extreme position is reached by the lower limit-stop element 44** at the seal start point A. During the sealing step (that is, at the straight segment from point A to point B), the upper limit-stop element 44** is in the second extreme position while, during the return step (that is, at the arc-shaped segment from point B to point A), the upper limit-stop element 44** is in the first extreme position.

The lower limit-stop element 44** is a modular element that can be replaced to change the length of the straight segment from point A to point B, that is, to change the sealing time at the same machine speed.

At the seal end point B, the following occurs when the contact between the sonotrode 25 and anvil 26 and the tubular wrap 8 is broken:
- the lower adjustment device 38* translates along the axis X (in particular downwards); specifically, each bushing 41* slides along the respective piston 40* until it reaches the (first) extreme position wherein the sheet 45* of the lower limit-stop element 44* hits the appendages 43; and
- the upper adjustment device 38** translates along the axis Y (in particular upwards); specifically, each bushing 41** slides along the respective piston 40** until it reaches the (first) extreme position wherein the sheet 45** of the upper limit-stop element 44** hits the support structure 37**.

Similarly, at the seal start point A, the following occurs when the sonotrode 25 and anvil 26 make contact with the tubular wrap 8:
- the lower adjustment device 38* dampens the contact translating along the axis X (in particular upwards); specifically, each bushing 41* slides along the respective piston 40* until it reaches the (second) extreme position wherein the sheet 45* of the lower limit-stop element 44* is arranged facing and at a certain, non-zero distance from the appendages 43; and
- the upper adjustment device 38** dampens the contact translating along the axis Y (in particular downwards); specifically, each bushing 41** slides along the respective piston 40** until it reaches the (second) extreme position wherein the sheet 45** of the upper limit-stop element 45** is arranged facing and at a certain, non-zero distance from the support structure 37**.

It is important to note that the translation along the axis X, Y of the adjustment devices 38 is adjusted by the lower limit-stop element 44* and the upper limit-stop element 44**, respectively; in addition, varying the dimensions of the limit-stop elements 44 changes (that is, reduces or increases) the travel along the axes X and Y of the adjustment devices 38.

It is understood that what is described above with specific reference to the transverse sealing unit 16 of the ultrasonic type (that is, comprising the sonotrode 25 and the anvil 26) can also be used with a different type of sealer; for example, in the case of an impulse sealer, the first device 25 may be of the type illustrated in Figure 10 and the second device 26 may be the same as the first device 25 or it may be a countering element.

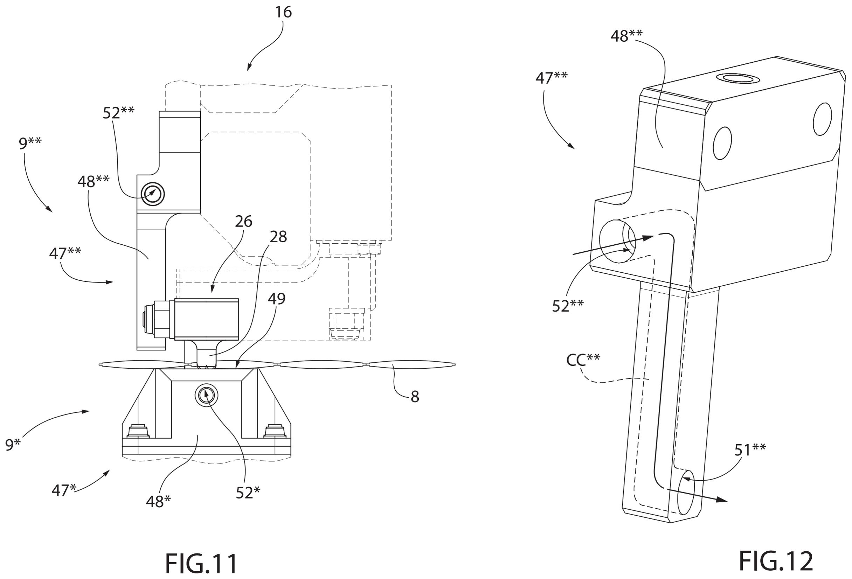

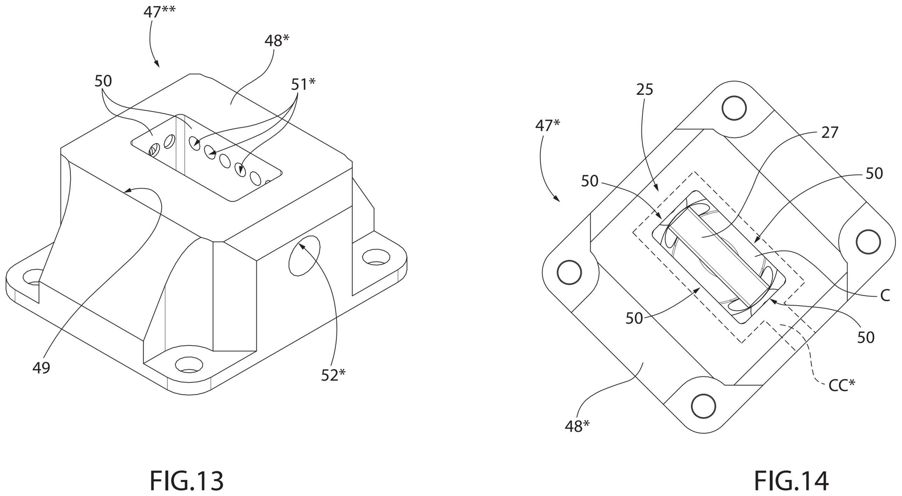

As illustrated in Figures 11 to 14, the transverse sealing unit 16 comprises a device 47 for conditioning the devices 25, 26 or only one of them. In particular, in the case of ultrasonic sealing, the applicant actually verified that the sealing head 27 must have a temperature within a certain range (40-60°C) to ensure that the sealing step is effective. The conditioning device 47 for the devices 25, 26 finds advantageous application in any transverse sealing unit 16 configured to perform cold sealing (particularly ultrasonic or impulse sealing).

More specifically, with reference to Figures 11-14 wherein the transverse sealing unit 16 is of the ultrasonic type, the transverse sealing unit 16 comprises a device 47* for conditioning the sonotrode 25. The sonotrode 25 is conditioned by means of a cooling fluid, in particular air (alternatively it could be a liquid). The conditioning device 47* comprises a conditioning element 48* for conditioning the sealing head 27, specifically defined by a cooling body 48* that completely surrounds the sealing head 27. The cooling body 48* is made of metal and has a flat upper surface 49 that is positioned essentially flush with the sealing head 27 in use. In particular, a cooling chamber C is defined within the cooling body 48*; the chamber has an essentially rectangular shape in plan and is configured to house the sealing head 27. The cooling chamber C is bounded by four flat surfaces 50; said four surfaces 50 are configured to be arranged, in use, at a given non-zero distance from a respective surface of the sealing head 27. Each surface 50 is provided with a number of through holes/openings 51 configured for the outlet of the cooling fluid. In particular, each surface 50 is provided with a number of through holes/openings 51 configured for the outlet of the cooling fluid. The holes 51 are all drilled at the same height, that is, at the same distance from the upper surface 49. The holes 51 are uniform in size. The holes 51 have a uniform diameter.

The holes 51 for the cooling fluid outlet are configured to direct air to the sealing head 27. The holes 51 for the cooling fluid outlet are in fluidic communication with an annular channel CC* formed in the cooling body 48*. Inside the cooling body 48*, the annular channel CC* completely surrounds (that is, on all sides) the sealing head 27. The holes 51 are evenly distributed on said surfaces 50 to direct the air equally to the end of the sealing head 27 to be cooled. The cooling body 48 is provided with a front opening 52 for connection via a fitting to a conditioning fluid supply circuit (not shown).

According to a preferred embodiment, the transverse sealing unit 16 also comprises a device 47** for conditioning the anvil 26. The anvil 26 is conditioned by means of a cooling fluid, in particular air. The conditioning device 47** comprises a conditioning element 48** for conditioning the countering head 28 defined by a cooling body 48**. The cooling body 48** is fitted with an end configured to be positioned, in use, at a non-zero distance from the countering head 28.

A channel CC** having an essentially cylindrical surface is defined within the cooling body 48**. Said channel CC** has a front inlet opening 52** for connection by means of a fitting to a conditioning fluid supply circuit (not illustrated) and a number of outlet openings 51** formed at said end of the cooling body 48** and arranged at a given, non-zero distance from the countering head 28. In particular, said channel CC** is provided with a number of holes 51** for the outlet of the cooling fluid (specifically, a single hole 51**). The holes 51** are uniform in size. The holes 51** have a diameter in the order of a few mm. The holes 51** for the cooling fluid outlet are configured to direct air to the end of the countering head 28 to be cooled.

Air jets directed towards the sealing head 27 and/or countering head 28 not only allow the sealing head 27 and/or countering head 28 to cool, but also improve the separation of the tubular wrap 8 from both the sealing head 27 and the countering head 28.

According to a further embodiment (not illustrated), the device 47** for conditioning the second device 26 may comprise a duct formed within the second device 26 itself, and the conditioning fluid may flow in this duct. In this embodiment, the conditioning fluid can be gaseous (air) or liquid (for example, water).

During the normal operation of the wrapping unit 7, the following are, therefore, involved in succession:
- a quantity 2 feeding step at the wrapping material band 11;
- a step of winding the wrapping material band 11 around the wrapping device 14 to form the tubular wrap 8;
- a longitudinal sealing step of the tubular wrap 8 in the overlapping area;
- a transverse sealing step of the tubular wrap 8 so as to form a continuous succession of interconnected pouches 1; and
- preferably a final cutting step wherein individual pouches 1 are obtained from the continuous succession of connected pouches 1.

Advantageously, the transverse sealing step is divided into a first sub-step wherein the first device 25 and the second device 26 travel the first straight segment of the trajectory in which they cooperate with each other to make the transverse seals 5; and a second sub-step wherein the first device 25 and the second device 26 travel the second arc-shaped segment of the trajectory.

Advantageously, the transverse sealing step is an impulse transverse sealing step.

Advantageously, the transverse sealing step also comprises an additional sub-step in which to cool the first device 25 and/or the second device 26.

### LIST OF REFERENCE NUMBERS IN THE FIGURES

- 1: pouch
- 2: quantity of loose product
- 3: wrapping sheet
- 4: longitudinal seal
- 5: transverse seals
- 6: wrapping machine
- 7: wrapping unit
- 8: tubular wrap
- 9: mobile callipers
- 10: feeding device
- 11: wrapping material band
- 12: feeding device
- 13: forming station
- 14: wrapping device
- 15: longitudinal sealing unit
- 16: transverse sealing unit
- 17: cutting device
- 18: advancing device
- 19: belts
- 20: tubular spindle element
- 21: ultrasound generator
- 22: feeding drum
- 23: hopper
- 24: inlet channel
- 25: first device or sonotrode
- 26: second or countering device
- 27: sealing head
- 28: countering head
- 29: sealing bar
- 30: support body
- 31: heating element
- 32: intermediate layer
- 33: coating layer
- 34: actuator device
- 35: reducer
- 36: eccentric shafts
- 37: support structure
- 38: adjustment device
- 39: adjustment elements
- 40: pistons
- 41: compasses
- 42: housing element
- 43: appendages
- 44: limit-stop element
- 45: sheet
- 46: lower surface
- 47: conditioning device
- 48: cooling body
- 49: upper surface
- 50: surface
- 51: hole
- 52: front opening
- P: feeding path
- Q: packaging path
- SC: control system
- UC: control unit
- M: operating means
- A: seal start point
- B: seal end point
- D: forward direction
- X: axis
- Y: axis
- C: cooling chamber
- CC: channel

## Claims

1. A machine (6) for the production of pouches (1) containing a respective quantity (2) of a loose material, in particular snus, comprising a forming station (13) configured to enclose each quantity (2) within a wrapping material band (11) comprising, in turn:
- a wrapping device (14), in the area of which the wrapping material band (11) is rolled up so as to form a tubular wrap (8) having a longitudinal extension, wherein a first edge of the wrapping material band (11) partially overlaps a second edge of the wrapping material band (11), thus defining an overlapping area;
- a longitudinal sealing unit (15) configured to longitudinally seal the tubular wrap (8) in the overlapping area; and
- a transverse sealing unit (16) configured to make transverse seals (5) of the tubular wrap (8) so as to form a continuous succession of pouches (1) connected to each other in the area of said transverse seals (5); the sealing unit (16) comprises a first sealing device (25) and a second sealing device (26), which cooperate to make the transverse seal (5); wherein the first and second sealing devices (25, 26) are both configured to follow a trajectory divided into a first straight segment, in which the first and the second devices (25, 26) cooperate to make the transverse seals (5), and a second circular arc-shaped segment;
the machine is **characterized in that** it comprises an adjustment device (38) configured to keep the sealing pressure constant during the first straight segment, wherein the adjustment unit (38) is divided into a first lower adjustment device (38*) connected to the first sealing device (25) and a second upper adjustment device (38**) connected to the second sealing device (26).

2. The machine (6) according to the preceding claim, wherein said first straight segment defines a sealing step, during which the first and the second sealing device (25, 26) cooperate with the tubular wrap (8) to make the transverse seals (5) from a seal start point (A) to a seal end point (B); said arc-shaped segment defines a return step of the first and the second sealing device (25, 26) from the seal end point (B) to the seal start point (A).

3. The machine (6) according to claim 1 or 2, wherein the adjustment device (38) comprises a number of adjustment elements (39) provided with respective axes (X, Y) parallel to one another and configured to translate along said axes (X, Y) in the area of a seal start point (A), wherein the first and the second sealing device (25, 26) come into contact with the tubular wrap (8) to make the transverse seals (5), and of a seal end point (B), wherein the contact of the first and the second sealing device (25, 26) with the tubular wrap (8) is interrupted.

4. The machine (6) according to claim 3, wherein each adjustment element (39) comprises sleeves (41), which slide along respective pistons (40) coaxial to said axes (X, Y).

5. The machine (6) according to claim 3 or 4, wherein the adjustment device (38) comprises a number of limit stop elements (44) configured to adjust the stroke of the adjustment elements (39) along the respective axes (X, Y).

6. The machine (6) according to any one of the preceding claims and comprising operating means (M) for operating the first and second sealing device (25, 26) comprising, in turn, an actuator device (34), preferably a brushless motor, configured to transmit the motion to a number of eccentric shafts (36), which control the motion of the first and second sealing device (25, 26).

7. The machine (6) according to any one of the preceding claims, wherein the transverse sealing unit (16) is configured to carry out a cold sealing of the tubular wrap (8).

8. The machine (6) according to claim 7, wherein the transverse sealing unit (16) is configured to carry out an impulse sealing of the tubular wrap (8) in order to obtain the transverse seals (5).

9. The machine (6) according to claim 8, wherein the first and/or second sealing device (25, 26) are defined by respective sealing bars (29) having a respective heating element (31) intended for heating the tubular wrap (8) and preferably obtained by means of an electrical resistance connected to a control unit, by which it is controlled by means of current impulses.

10. The machine (6) according to any one of the preceding claims, wherein the first and second sealing device (25, 26) are configured to move along the first straight segment of the respective trajectories with even speeds, preferably with the same speed with which the tubular wrap (8) moves.

11. A method for the production of pouches (1) containing a quantity (2) of a loose material, in particular snus, comprising in succession:
- a step in which to roll a wrapping material band (11) around a wrapping device (14) so as to form a tubular wrap (8) having a longitudinal extension, wherein a first edge of the wrapping material band (11) partially overlaps a second edge of the wrapping material band (11), thus defining an overlapping area;
- a longitudinal sealing step, during which the tubular wrap (8) is longitudinally sealed in the overlapping area; and
- a transverse sealing step, during which the tubular wrap (8) is transversely sealed so as to form a continuous succession of pouches (1) connected to one another; wherein the transverse sealing step is carried out by means of a transverse sealing unit (16) having a first sealing device (25) and a second sealing device (26) and comprising, in turn:
a) a first sub-step, during which the first sealing device (25) and the second sealing device (26) follow a first straight segment of a trajectory, wherein they cooperate with one another to make the transverse seal; and wherein to keep the sealing pressure constant by means of an adjustment unit (38) divided into a first lower adjustment device (38*) connected to the first sealing device (25) and a second upper adjustment device (38**) connected to the second sealing device (26); and
b) a second sub-step, during which the first sealing device (25) and the second sealing device (26) follow a second arc-shaped segment of the trajectory.
